(19) Europäisches Patentamt

European Patent Office

Office européen des brevets

(11) **EP 2 585 419 B1**

(12) **EUROPÄISCHE PATENTSCHRIFT**

(45) Veröffentlichungstag und Bekanntmachung des Hinweises auf die Patenterteilung:
**09.05.2018 Patentblatt 2018/19**

(21) Anmeldenummer: **11745937.0**

(22) Anmeldetag: **27.06.2011**

(51) Int Cl.:
*C04B 35/573* *(2006.01)*        *C04B 35/83* *(2006.01)*
*C04B 35/634* *(2006.01)*        *C04B 37/00* *(2006.01)*
*C01B 32/05* *(2017.01)*

(86) Internationale Anmeldenummer:
**PCT/EP2011/060734**

(87) Internationale Veröffentlichungsnummer:
**WO 2011/161264 (29.12.2011 Gazette 2011/52)**

(54) **VERFAHREN ZUM HERSTELLEN EINES KERAMIKMATERIALS FÜR EINEN KERAMISCHEN WERKSTOFF**

METHOD FOR PRODUCING A CERAMIC SUBSTANCE FOR A CERAMIC MATERIAL

PROCÉDÉ POUR PRODUIRE UNE MATIÈRE CÉRAMIQUE DESTINÉ À UN MATÉRIAU CÉRAMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.04.2011 DE 102011007815**
**25.06.2010 DE 102010030551**

(43) Veröffentlichungstag der Anmeldung:
**01.05.2013 Patentblatt 2013/18**

(73) Patentinhaber: **SGL Carbon SE**
**65201 Wiesbaden (DE)**

(72) Erfinder:
• **KIENZLE, Andreas**
**86405 Meitingen (DE)**
• **KRÄTSCHMER, Ingrid**
**86405 Meitingen (DE)**
• **REITER, Birgit**
**72076 Tübingen (DE)**

(56) Entgegenhaltungen:
EP-A1- 1 008 569      EP-A1- 1 493 723
EP-A2- 1 634 860      DE-A1- 10 035 111

**Beschreibung**

GEBIET DER ERFINDUNG

Die vorliegende Erfindung betrifft ein Verfahren zum Herstellen von Keramikmaterial, welches für hochsteife Strukturbauelemente geeignet ist und einen besonders hohen Grad an Homogenität im Hinblick auf die Dichte der materiellen Komponenten und die weiteren chemischen und physikalischen Eigenschaften aufweist.

HINTERGRUND DER ERFINDUNG

Keramikmaterial besitzt eine Vielzahl vorteilhafter physikalischer, insbesondere mechanischer, und chemischer Eigenschaften. Aufgrund dieser Eigenschaften lassen sich derartige Materialzusammensetzungen und Werkstoffe in vielen technischen Anwendungsgebieten in vorteilhafter Weise einsetzen.

Problematisch bei bestehenden Keramikmaterialien ist jedoch, dass häufig ein besonders hoher Aufwand nötig ist, um einen hohen Grad an Homogenität gewährleisten zu können- Häufig ist dies gerade bei komplexen dreidimensionalen Strukturen in befriedigender Art und Weise gar nicht möglich.

Ein hoher Grad an Homogenität ist jedoch bei derartigen Keramikmaterialien unumgänglich, um hohe Qualitätsanforderungen gewährleisten zu können.

Die (EP1634860 A2) beschreibt ein Carbidkeramikmaterial welches eine erhöhte Schadenstoleranz, durch eingesetzte Kohlenstoff-Kurzfasern im Ausgangsmaterial, aufweist.

Der Erfindung liegt die Aufgabe zu Grunde, ein Verfahren zum Herstellen von Keramikmaterial zu entwickeln, bei welchen auf besonders einfache und zuverlässige Art und Weise ein hoher Grad an Homogenität des Keramikmaterials und der weiteren chemischen und physikalischen Eigenschaften erreicht werden kann.

Die der Erfindung zu Grunde liegende Aufgabe wird mit einem Verfahren zum Herstellen von Keramikmaterial mit den Merkmalen des unabhängigen Patentanspruchs 1 gelöst. Vorteilhafte Weiterbildungen sind Gegenstand der abhängigen Ansprüche.

Die vorliegende Erfindung ist ein Verfahren zum Herstellen von Keramikmaterial und zwar mit Schritten (S1) Herstellen einer homogenen Mischung, die

(a) Kohlenstofffasern mit einer Faserlängenverteilung $D_{50} < 15\ \mu m$, wobei die Kohlenstofffasern aus gemahlenen und carbonisierten Viskose- und/oder Zellulosefasern hergestellt sind, sowie

(b) mindestens einem pulverförmigen und carbonisierbaren Binder (20), enthält, (S2) Verdichten der homogenen Mischung unter Einwirkung von Druck (30), (S3) Temperaturbehandlung zum Carbonisieren oder zum Carbonisieren und Graphitieren der verdichteten homogenen Mischung zum Erhalt eines Kohlenstoffmaterials und (S4) Silizieren des Kohlenstoffmaterials zum Erhalt des Keramikmaterials mit einer Dichte im Bereich von 2,8 - 3,1 $g/cm^3$.

Die Kohlenstofffasern werden durch mahlen und carbonisieren von Viskose- und/oder Zellulosefasern hergestellt, insbesondere werden diese zuerst gemahlen und anschließend carbonisiert.

Durch Intensivmischen mit dem zuzuführenden Binder wird ein besonders hoher Grad an Homogenität der Mischung erreicht.

Zwar lassen sich oft Faserlängenverteilungen mit strikten Ausschlussgrößen herstellen, also Verteilungen, bei welchen keine Teilchen auftreten, die in ihrem Durchmesser bestimmte Grenzen überschreiten oder unterschreiten. Jedoch ist es auch oft ausreichend, Faserlängenverteilungen auf der Grundlage bestimmter D-Werte anzugeben. Für bestimmte Ausführungsformen und Anwendungsgebiete ist die Randbedingung, dass die Faserlängenverteilung einen $D_{50}$-Wert von kleiner als 15 $\mu m$ aufweist, oft ausreichend.

Bevorzugt weisen die Kohlenstofffasern (10) eine Faserlängenverteilung von $D_{95} < 30\ \mu m$ auf.

Weitere Vorteile hinsichtlich der Homogenität des zu erzeugenden Keramikmaterials ergeben sich, wenn mehrere Randbedingungen im Sinne der Angabe voneinander unabhängiger D-Werte gesetzt werden. Dabei kann die Angabe des $D_{95}$-Wertes alternativ oder zusätzlich zur Angabe des weiter oben beschriebenen $D_{50}$-Werts oder anderer D-Werte gesehen werden.

Es ist bevorzugt, dass der pulverförmige Binder (20) pulverförmiges Harz, insbesondere pulverförmiges Phenolharz enthält.

Vorzugsweise hat der pulverförmige Binder eine Partikelgrößenverteilung $D_{50} < 100 \mu m$.

Die Homogenität des zu erzeugenden Keramikmaterials ergibt sich insbesondere, wenn die beschriebenen Eigenschaften für die Faserlängenverteilungen nicht nur für das oder die Ausgangsmaterialien, sondern auf für die Zusatzstoffe, also insbesondere für den oder die Binder gefordert werden.

Bevorzugt ist das Mischungsverhältnis in der homogenen Mischung so gewählt und gegebenenfalls der Druck beim Verdichten (S2) und/oder die Temperatur bei der Temperaturbehandlung (S3) so gewählt, dass das Kohlenstoffmaterial eine Materialdichte im Bereich von ca. 0,5g/cm$^3$ bis ca. 0,85g/cm$^3$ hat.

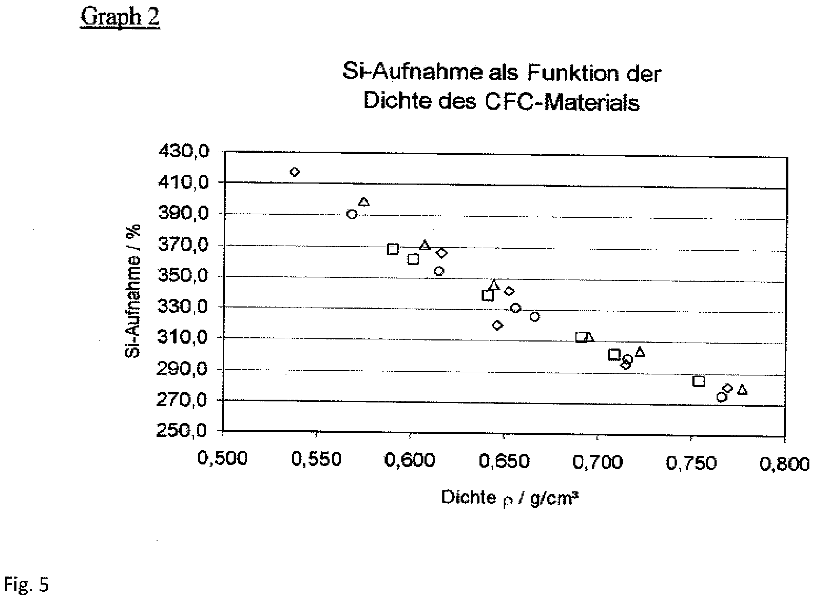

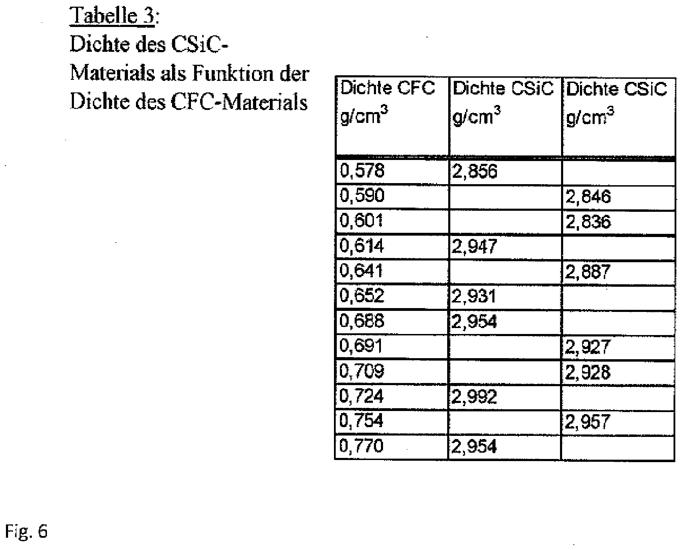

Vorzugsweise kann dies auf der Grundlage mindestens eines der Zusammenhänge, die in der Tabelle 2 der Fig. 5 und in dem Graphen 2 der Fig. 6 angegeben sind, erfolgen.

Beim Schritt (S2) des Mischens oder des Intensivmischens können ein oder mehrere Zusatzstoffe zur Ausbildung des homogenen Mischpulvers zugesetzt werden, insbesondere Additive und/oder Füllstoffe.

Durch die Verwendung entsprechender Binder, Additive und/oder Füllstoffe, deren mengenmäßige Einstellung und Konzentration und deren Einbau in das Gefüge des zu erzeugenden Keramikmaterials können deren Eigenschaften über weite Strecken mitbestimmt werden.

Vorzugsweise kann dies auf der Grundlage mindestens eines der Zusammenhänge erfolgen, die in der Gleichung (3)

$$\rho_{sil} = -1{,}7655 \cdot \frac{\rho^2}{g/cm^3} + 3{,}1006 \cdot \rho + 1{,}6223 \cdot g/cm^3, \qquad (3)$$

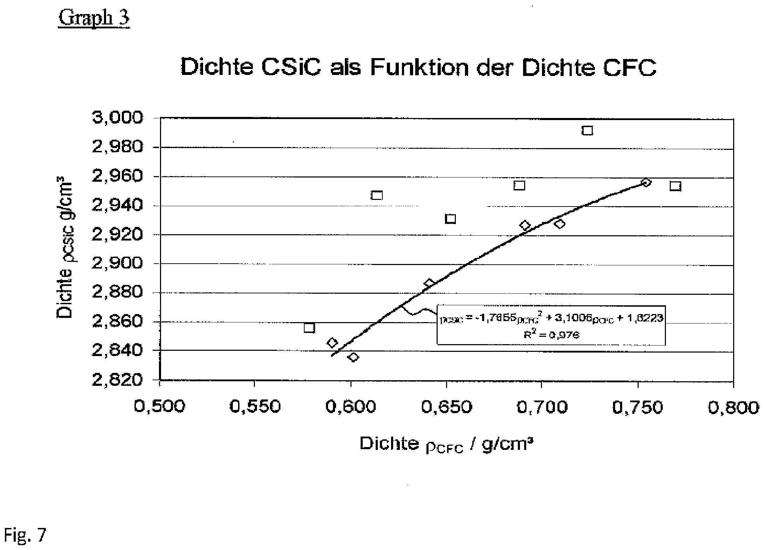

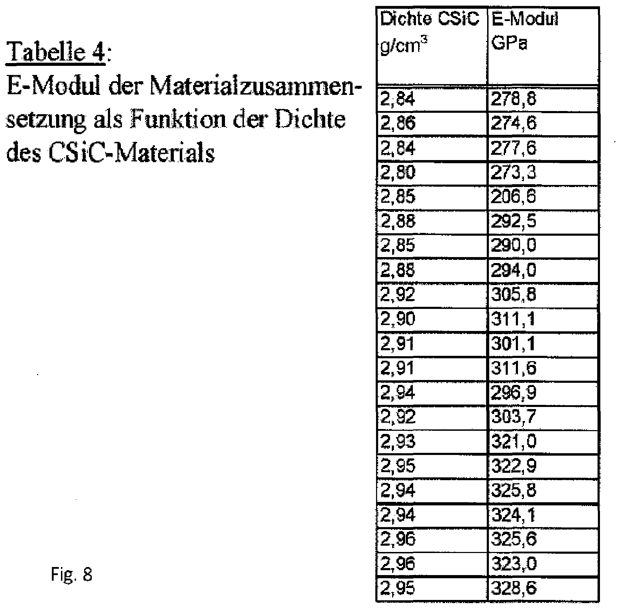

der Tabelle 3 der Fig. 7 und in dem Graphen 3 der Fig. 8 angegeben sind.

Dabei bezeichnen $\rho_{sil}$ und $\rho$ die Dichten der silizierten bzw. nicht silizierten Form der erhaltenen verdichteten homogenen Mischung.

Wie im Zusammenhang mit der Formgebung oben im Einzelnen erläutert wurde, besteht auch beim Vorgang des Silizierens die Möglichkeit der Steuerung über einen geschlossenen Formelausdruck oder die Steuerung über die empirischen Werte mittels einer grafischen Auswertung oder mittels eines Tabellenausleseverfahrens oder Table-Look-Up-Verfahrens.

Vorzugsweise kann die Dichte - insbesondere der silizierten Form - des erhaltenen Keramikmaterials (100) direkt oder indirekt auf der Grundlage mindestens eines der Zusammenhänge eingestellt werden, die in der Gleichung (4) beschrieben sind

$$\frac{E}{GPa} = 461{,}79 \cdot \frac{\rho}{g/cm^3} - 1040{,}4, \qquad (4)$$

oder in der Tabelle 4 der Fig. 5 oder in dem Graphen 4 der Fig. 10 angegeben sind.

Dabei bezeichnet E den Elastizitätsmodul - insbesondere der silizierten Form - des erhaltenen Keramikmaterials oder des Vorprodukts des Keramikmaterials.

Auch bei der Steuerung des Elastizitätsmoduls bieten sich wie beim Formgebungsprozess oder beim Silizieren die entsprechenden Steuermöglichkeiten an.

Neben der Steuerung des Elastizitätsmoduls können auch andere mechanische Eigenschaften, z.B. die Härte oder das Dehnungs- und Stauchverhalten, aber auch thermische oder elektrische Eigenschaften, z.B. das thermische Ausdehnungsvermögen oder die thermische Leitfähigkeit, entsprechend über den Prozess des Formgebens, d.h. letztlich über die Druckverhältnisse, aber auch über die Art und Weise des Carbonisierens und/oder Silizierens und letztlich auch über die Anteile der Ausgangsstoffe eingestellt werden.

Es ist bevorzugt, dass die homogene Mischung 20-50 Gew.% Binder und 50-80 Gew.% Kohlenstofffasern, bevorzugt 30-40 Gew.% Binder und 60-75 Gew.% Kohlenstofffasern enthält.

Vorzugsweise wird bei dem beim Schritt des Verdichtens (S2) ein Pressdruck (p) im Bereich von etwa 1,0 MPa bis etwa 4,0 MPa eingestellt.

Beim Schritt des Verdichtens (S2) wird die homogene Mischung vorzugsweise in einer Form zu einem Formpressling geformt wird der Formpressling im Temperaturbehandlungsschritt (S3) zu einem Formkörper aus dem Kohlenstoffmaterial umgewandelt.

Nach dem Schritt (S2) des Mischens oder des Intensivmischens und vor dem Schritt (S3) des Formens können Vorgänge des Entstaubens (T1), Granulierens (T2) und/oder Zwischenlagerns (T3) durchgeführt werden.

Nach dem Schritt (S3) des Formens kann ein Schritt (U1) des Carbonisierens der erhaltenen verdichteten homogenen Mischung oder der Vorform der homogenen Materialzusammensetzung erfolgen, insbesondere durch Pyrolysieren.

Nach dem Schritt (S3) des Formens und insbesondere nach dem Schritt (U1) des Carbonisierens kann ein Schritt (U4) oder (V3) des Silizierens der erhaltenen verdichteten homogenen Mischung erfolgen.

Durch den Vorgang des Entstaubens, d.h. das Entfernen von Partikelanteilen, können die Handhabbarkeit des erhaltenen Mischpulvers gesteigert und eine Explosionsgefahr beim Handhaben des Mischpulvers verringert werden. Ein Aspekt der Handhabbarkeit ist auch die Reduktion von Verunreinigungen der Arbeitsumgebung durch das Entfernen von Stäuben.

Das Granulieren besteht im Wesentlichen im Ausbilden mesoskopischer Partikel, Cluster oder Aggregate, z.B. im Bereich von einigen 100 $\mu$m bis einigen mm in im Wesentlichen fester Form, die allerdings die homogene Verteilung der im Mischpulver homogen gemischt aufbereiteten Ausgangsstoffe in sich tragen. Ein derartiges Granulat kann, sofern nicht das Mischpulver als solches dazu geeignet ist, zwischengelagert werden, und es lässt sich bei Bedarf in besonders geeigneter Weise handhaben, portionieren und weiterverarbeiten.

Vorzugsweise wird der Formpressling vor dem Carbonisieren gehärtet.

Es ist bevorzugt, dass mehrere Formkörper aus Kohlenstoffmaterial hergestellt werden, die vor dem Schritt des Silizierens (S4) mittels eines Klebers, insbesondere eines carbonisierbaren Klebers, zum Erhalt einer Formkörperanordnung aneinander gefügt werden.

In einer bevorzugten Ausführungsform enthält der carbonisierbare Kleber Harz, insbesondere Phenolharz und Siliziumkarbid-Pulver.

Das Siliziumkarbid-Pulver hat einen durchschnittlichen Partikeldurchmesser von 1-50$\mu$m, bevorzugt 3-20$\mu$m, besonders bevorzugt 5-10$\mu$m.

Der carbonisierbare Kleber enthält 5-50 Gew.% Wasser, 20-80 Gew.% Siliziumkarbidpulver und 10-55 Gew,% Harz, bevorzugt 10-40 Gew.% Wasser, 30-65 Gew.% Siliziumkarbidpulver und 20-45 Gew.% Harz, besonders bevorzugt 15-25 Gew.% Wasser, 45-55 Gew.% Siliziumkarbidpulver und 27-33 Gew.% Harz.

Der carbonisierbare Kleber enthält weniger als 10 Gew.%, insbesondere weniger als 3 Gew.% insbesondere keinen Füllstoff aus Kohlenstoffmaterial.

Der Schritt (S3) des Keramikmaterials (100) oder des Vorprodukts (50) des Keramikmaterials (100) kann einen Schritt des Pressens oder Formpressens und gegebenenfalls des Härtens aufweisen. Das erhaltene Mischpulver oder sein Granulat werden also durch einen entsprechenden Formgebungsprozess in das erfindungsgemäße Keramikmaterial überführt, wobei gegebenenfalls ein Härtungsvorgang eingeschlossen wird. Die Formgebung über einen Vorgang des Pressens, d.h. über die Applikation eines mechanischen Drucks, führt zu einer Verdichtung der im Pulver oder Granulat bereits als homogene Mischung vorliegenden Materialverteilung. Über die Gestaltung des Pressvorgangs, d.h. über die Druck- und/oder Temperaturverteilung über Zeit und Raum lassen sich dann über weite Bereiche auch entsprechende physikalische und chemische Eigenschaften der fertig ausgeformten homogenen Materialzusammensetzung bestimmen, und zwar ebenfalls in homogener Art und Weise.

Dies kann z.B. auf der Grundlage mindestens eines der Zusammenhänge erfolgen, die angegeben werden durch die nachfolgenden Gleichungen (1) und (2)

$$\frac{\rho_1}{g/cm^3} = -0{,}0084 \cdot \frac{p^2}{MPa^2} + 0{,}1126 \cdot \frac{p}{MPa} + 0{,}5043 , \qquad (1)$$

$$\frac{\rho_2}{g/cm^3} = -0{,}0067 \cdot \frac{p^2}{MPa^2} + 0{,}0986 \cdot \frac{p}{MPa} + 0{,}4836 , \qquad (2)$$

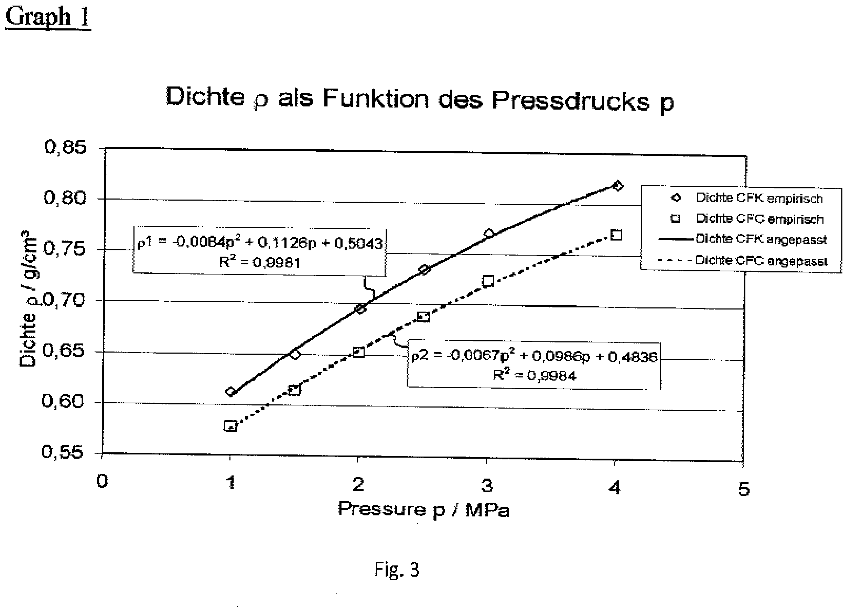

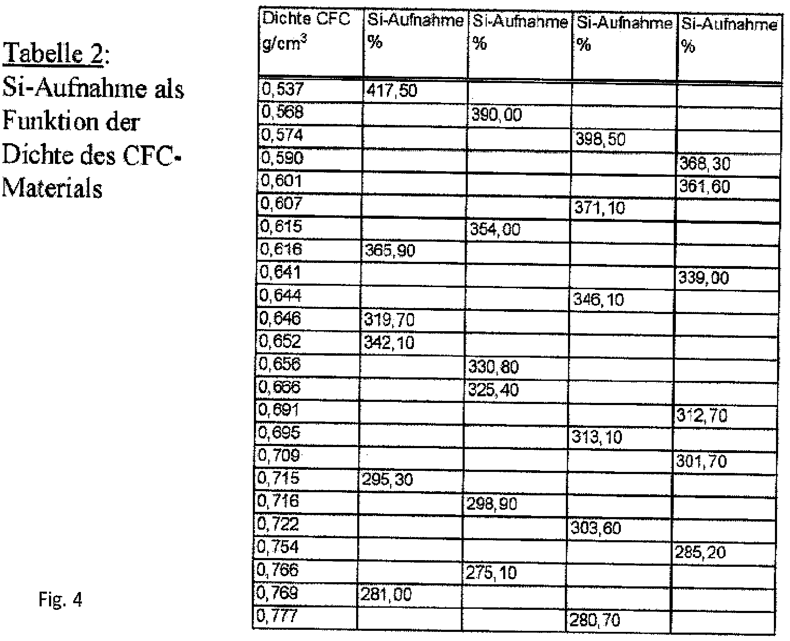

durch die Tabelle 1 der Fig. 3 und/oder durch den Graphen 1 der Fig. 4,

Dabei bezeichnen $\rho_1$, $\rho_2$ die Dichte des erhaltenen Keramikmaterials (100) oder des Vorprodukts (50) des Keramikmaterials (100) - insbesondere nach einem Carbonisieren - und p den Druck beim Schritt (S3) des Formens bezeichnen.

Über die hier angegebenen Zusammenhänge, seien diese in geschlossener Form beschreibbar oder ausschließlich empirisch gegeben, können bei einer gewünschten Materialdichte entsprechende Formgebungsprozesse gestaltet werden, die gerade eine gewünschte Materialdichte nach dem Formgebungsprozess zum Ergebnis haben. Die jeweils gewünschte Materialdichte kann dabei gegebenenfalls auch aus anderen physikalisch-chemischen Zusammenhängen abgeleitet werden, so dass sich in einer Reihe von empirischen Schlüssen diejenigen Druckparameter bestimmen lassen, die zu einem gewünschten Eigenschaftenprofil bei der erfindungsgemäßen homogenen Materialzusammensetzung führen.

Bei der Steuerung entsprechender Verfahren bieten sich also die geschlossenen mathematischen Zusammenhänge oder auch die empirischen Werte aus Grafiken oder Tabellen an, wobei auch an so genannte Tabellenausleseverfahren oder Table-Look-Up-Verfahren gedacht werden kann.

Oft ist es wünschenswert, bestimmte Verarbeitungsvorgänge am Kohlenstoffmaterial des Vorprodukts (50) des erfindungsgemäßen Keramikmaterials durchzuführen. Dies betrifft insbesondere Prozesse des Fügens oder auch des maschinellen Bearbeitens durch Bohrer, Fräsen, Schleifen, Hobeln, da diese Prozesse an dem Kohlenstoffmaterial des Vorprodukts (50) des erfindungsgemäßen Keramikmaterials z.B. wegen der dort auftretenden geringeren Härte oder Spröde leichter zu realisieren sind.

Es kann sich jedoch direkt nach der Formgebung, d.h. direkt an dem Vorprodukt (50) eine Abfolge von weiteren Umwandlungsprozessen anschließen, unter anderem dem Carbonisieren und/oder dem Silizieren, die zu der oben bereits angedeuteten Gefügeumgestaltung führen.

Es ist besonders bevorzugt, dass der Formkörperanordnung vor dem Schritt S4 des Silizierens durch Abtrag von Kohlenstoffmaterial von der Formkörperanordnung so bearbeitet wird, dass ein Vorkörper aus Kohlenstoffmaterial mit einer vordefinierten Form entsteht.

Vorzugsweise wird der Vorkörper vor dem Silizieren carbonisiert.

Durch diese Vorgehensweisen können Stoffeigenschaften der Materialzusammensetzung entsprechend eingestellt werden, nämlich über die Dichte, die Anteile an Kohlenstoff, Silizium und gegebenenfalls anderen Bestandteilen und über die Ausbildung und Modulation der Gefügeeigenschaften, so dass sich in weiten Bereichen die Elastizität, die Festigkeit, die Härte, die Wärmeleitfähigkeit und andere Materialeigenschaften zielgerichtet und an der jeweiligen Anwendung und Verwendung orientiert einstellen lassen.

Gemäß einem weiteren Aspekt der vorliegenden Erfindung wird auch ein Keramikmaterial für einen keramischen Werkstoff vorgeschlagen, insbesondere für hochsteife Strukturbauteile oder dergleichen, welches gemäß einem Verfahren gemäß der vorliegenden Erfindung in der vorangehend beschriebenen Art und Weise ausgebildet wird oder wurde.

Das erfindungsgemäße Keramikmaterial kann, wenn es einmal im Rahmen des Formgebungsprozesses in eine entsprechende Form gebracht wurde, direkt in einer Anwendung verwendet werden. Es bietet sich jedoch auch an, das Keramikmaterial zunächst in Plattenform auszubilden, diese Platten dann flächenmäßig aneinanderzufügen, um einen Einhüllungskörper für eine größere dreidimensionale Struktur oder einen größer ausgedehnten Flächenkörper auszubilden, welche dann gegebenenfalls nach Carbonisierung und/oder Silizierung als Grundlage zur Herstellung eines Erzeugnisses durch Herausarbeiten der entsprechend gewünschten dreidimensionalen Struktur oder Flächenform dient.

Diese und weitere Aspekte werden auf der Grundlage der beigefügten Zeichnungen erläutert.

KURZBERSCHREIBUNG DER FIGUREN

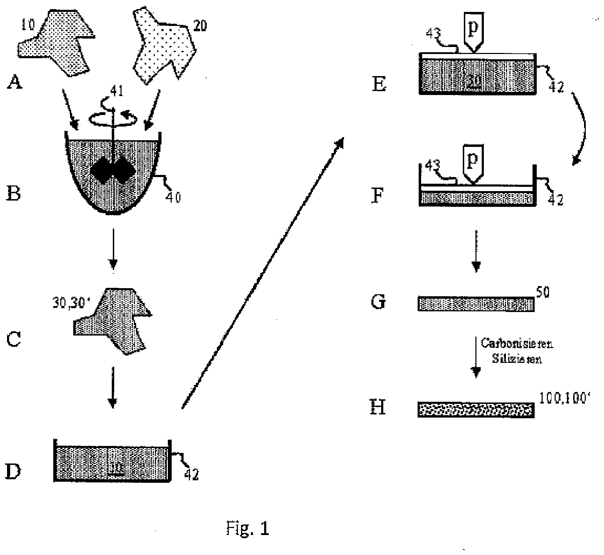

Fig. 1A - H   zeigen verschiedene Zwischenstufen, die bei einer Ausführungsform des erfindungsgemäßen Verfahrens zum Herstellen eines Keramikmaterials für einen keramischen Werkstoff erreicht werden.

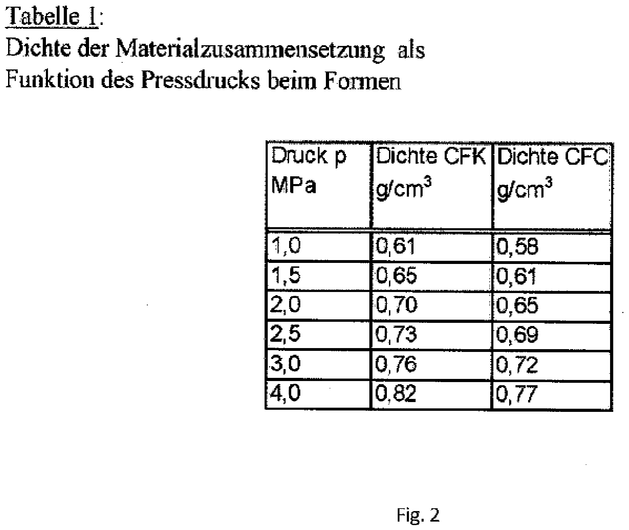

Fig. 2, 3   zeigen auf der Grundlage einer Tabelle bzw. eines Graphen, wie bei einer Ausführungsform des erfindungsgemäßen Verfahrens zum Herstellen eines Keramikmaterials für einen keramischen Werkstoff die Dichte eines erfindungsgemäßen Kohlenstoffmaterials mittels des Drucks beim Formgebungsprozess eingestellt werden kann.

Fig. 4, 5   zeigen auf der Grundlage einer Tabelle bzw. eines Graphen, wie die Aufnahme von Silizium beim Vorgang des Silizierens bei einer Ausführungsform des erfindungsgemäßen Verfahrens zum Herstellen einer Keramikmaterials für einen keramischen Werkstoff über die Dichte der Vorprodukts des Keramikmaterials gesteuert werden kann.

Fig. 6, 7   zeigen auf der Grundlage einer Tabelle bzw. eines Graphen, wie bei einer Ausführungsform des erfindungsgemäßen Verfahrens zum Herstellen eines Keramikmaterials für einen keramischen Werkstoff die Dichte eines erfindungsgemäßen Keramikmaterials oder eines Vorprodukts davon nach einem Prozess des Silizierens über die Dichte der nicht silizierten Form des Kohlenstoffmaterials oder des Vorprodukts davon gesteuert werden kann.

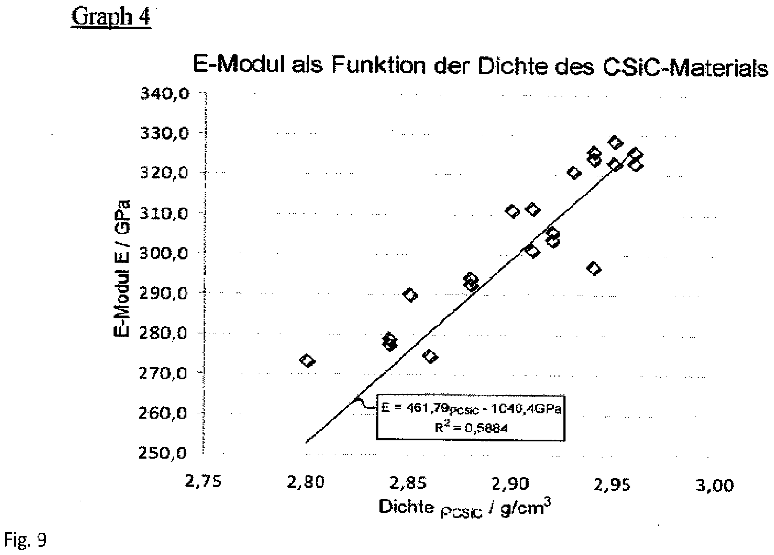

Fig. 8, 9   zeigen auf der Grundlage einer Tabelle bzw. eines Graphen, wie bei einer Ausführungsform des erfindungsgemäßen Verfahrens zum Herstellen eines Keramikmaterials für einen keramischen Werkstoff der Elastizitätsmodul einer Ausführungsform des erfindungsgemäßen Keramikmaterials oder des Vorprodukts davon über die Dichte der silizierten Form des Kohlenstoffmaterials oder der Vorstufe davon gesteuert werden kann.

DETAILBESCHREIBUNG DER AUSFÜHRUNGSFORMEN

Nachfolgend werden Ausführungsformen der vorliegenden Erfindung beschreiben. Sämtliche Ausführungsformen der Erfindung und auch ihre technischen Merkmale und Eigenschaften können einzeln isoliert oder wahlfrei zusammengestellt miteinander beliebig und ohne Einschränkung kombiniert werden.

Strukturell und/oder funktionell gleiche, ähnliche oder gleich wirkende Merkmale oder Elemente werden nachfolgend im Zusammenhang mit den Figuren mit denselben Bezugszeichen bezeichnet. Nicht in jedem Fall wird eine detaillierte Beschreibung dieser Merkmale oder Elemente wiederholt.

Zunächst wird auf die Zeichnungen im allgemeinen Bezug genommen.

Die vorliegende Erfindung betrifft unter anderem auch ein Herstellungsverfahren für ein Keramikmaterial, welches für die Erzeugung hochsteifer Strukturbauteile geeignet ist.

Zur Herstellung von hochsteifen Bauteilen wird ein homogenes Ausgangsmaterial benötigt.

Filzbasierte Materialien zeigen aufgrund der Strukturierung, nämlich aufgrund ihres gegebenenfalls vorgesehenen Schichtaufbaus, inhomogene mechanische Eigenschaften. Bei schlickergegossenen SiSiC-Bauteilen sind bisher nur geringe oder dünne Wandstärken realisierbar. Bauteile mit dickeren Wandstärken oder dickere Bauteile bauen beim Aufheizen und Abkühlen vergleichsweise starke Temperaturgradienten auf, die zur Zerstörung des Bauteils führen können. Holzbasierte Keramiken weisen im Herstellungsprozess einen hohen Schrumpfwert von bis zu 70 % auf und sind aus diesem Grund für komplexe Geometrien als Ausgangsmaterial nicht geeignet.

Erfindungsgemäß wird daher vorgeschlagen, zur Herstellung eines sehr homogenen keramischen Bauteils homogene feine Pulver als Rohstoff für eine Mischung mit einem Binder, z.B. in Form eines Phenolharzpulvers, zu verwenden. Die Ausgangskomponenten werden in einem Intensivmischer homogen gemischt und anschließend z.B. zu Platten verpresst.

Um die vorgesehene Mischung der Ausgangskomponenten verarbeiten und handhaben zu können, können sie granuliert und/oder entstaubt werden.

Die Materialdichten der gepressten Platten beeinflussen die späteren Materialeigenschaften in chemischer und physikalischer, insbesondere in mechanischer Hinsicht. Somit kann über eine gezielte Steuerung der Materialdichte und ihrer Homogenität die Gesamtheit der physikalischen und chemischen Eigenschaften zum Teil gesteuert werden.

Zum Herstellen eines Keramikmaterials (100) für einen keramischen Werkstoff 100' wird vorgeschlagen, mindestens ein Ausgangsmaterial (10) als homogenes Pulver mit einer Faserlängenverteilung $D_{50}$ unterhalb von 15 $\mu$m mit mindestens einem Binder (20) als Pulver durch Verdichten der homogenen Mischung unter Einwirkung von Druck (S2) in ein homogenes Mischpulver (30) zu überführen, um dann daraus durch einen entsprechenden Formgebungsprozess (S3) das gewünschte Kohlenstoffmaterial auszubilden.

Nun wird im Detail auf die Zeichnungen Bezug genommen.

Fig. 1 zeigt zur besseren Veranschaulichung noch einmal Zwischenstufen A bis H, die bei einer Ausführungsform des erfindungsgemäßen Verfahrens zum Herstellen eines Keramikmaterials (100) für einen keramischen Werkstoff erreicht werden.

Gemäß dem Zwischenzustand A der Fig. 1 werden zunächst das Ausgangsmaterial 10 und ein pulverförmiger und carbonisierbarer Binder 20, in homogener Form bereitgestellt, wobei entsprechende Kriterien an die Faserlängenverteilungen zu stellen sind; dies betrifft einerseits das Ausgangsmaterial 10, insbesondere aber auch den Binder 20.

Gemäß dem in Fig. 1B gezeigten Zwischenzustand werden das Ausgangsmaterial 10 und die Zusatzstoffe 20 in einem Gefäß 40 mittels eines Mischers 41 intensiv gemischt.

Es ergibt sich als Zwischenprodukt die homogene Mischung 30 gemäß dem Zwischenzustand der Fig. 1C.

Diese homogene Mischung 30 wird dann gemäß Fig. 1D in das Gefäß 42 einer Pressvorrichtung 42, 43 eingefüllt und gemäß dem Zwischenzustand der Fig. 1E über einen Stempel 43 mit einem Druck p, dem Pressdruck, hier in einseitiger Art und Weise beaufschlagt.

Im Übergang zum Zustand der Fig. 1F wird auf diese Art und Weise durch die Wirkung des Stempels 43 unter dem Druck p die homogene Mischung (30) in der Form des Gefäßes 42 verdichtet, so dass sich gemäß Fig. 2G das Vorprodukt (50) für das erfindungsgemäße Keramikmaterial (100) ergibt. Diese ergibt sich dann nach einem Zwischenverarbeitungsschritt durch Carbonisieren und/oder Silizieren.

Die Fig. 2 und 3 geben in Form einer Tabelle 1 bzw. einem Graphen 1 den Zusammenhang zwischen dem Pressdruck p beim Verdichten der homogenen Mischung (30) und der Dichte $\rho$ des Keramikmaterials (100) an, insbesondere nach Carbonisieren, bei einer Ausführungsform des erfindungsgemäßen Verfahrens.

In der Tabelle 1 der Fig. 2 sind zwei empirische Messreihen zu Drucken zwischen 1,0 MPa und 4,0 MPa angegeben, deren Daten in dem Graphen durch Quadrate bzw. durch Rauten eingezeichnet sind. Eine genauere Analyse ergibt, dass die Dichten $\rho_1$ und $\rho_2$ der Messreihen in den verwendeten Druckbereichen jeweils durch ein Polynom zweiten Grades beschrieben werden können.

Die numerischen Werte der Tabelle 1, die Angaben aus dem Graphen 1 und die funktionalen Zusammenhänge aus den Anpassungskurven für $\rho_1$ und $\rho_2$ können für die Steuerung der Dichte $\rho$ über den Pressdruck p verwendet werden, wie dies oben bereits im Detail erläutert wurde.

Die Fig. 4 und 5 mit der Tabelle 2 bzw. dem Graphen 2 beschreiben die Siliziumaufnahme in einer Ausführungsform des erfindungsgemäßen Verfahrens nach Carbonisierung als Funktion der Dichte des Kohlenstoffmaterials vor der Silizierung.

Die Tabelle 2 der Fig. 4 zeigt vier empirische Messreihen, die im Graphen 2 der Fig. 5 durch Rauten, Kreise, Dreiecke bzw. Quadrate repräsentiert sind.

Wiederum können die numerischen Angaben aus der Tabelle 2 bzw. die Angaben aus dem Graphen 2 zur Steuerung der Siliziumaufnahme über die Dichte bei dem erfindungsgemäßen Kohlenstoffmaterial nach Carbonisierung verwendet werden.

Auch ist denkbar, dass auf der Grundlage der Daten der Tabelle 2 wiederum eine Anpassungskurve - z.B. in Form eines Polynomausdrucks - ermittelt wird, dessen Parameter dann direkt zur Steuerung des Zusammenhangs zwischen Siliziumaufnahme und Dichte im Herstellungsprozess verwendet werden können.

Die Tabelle 3 und der Graph 3 aus den Fig. 6 bzw. 7 beschreiben die Dichte eines CSiC-Materials, als Funktion der Dichte des CFC-Materials, also des erfindungsgemäßen Kohlenstoffmaterials nach Pressen und gegebenenfalls nach Carbonisierung.

Aus den Zusammenhängen der Tabelle 3 der Fig. 6 und des Graphen 3 aus Fig. 7 ergibt sich eine Möglichkeit, die Siliziumaufnahme beim Silizieren über die Dichte des erfindungsgemäßen Kohlenstoffmaterials oder des Vorprodukts und damit über den entsprechenden Pressdruck und die miteinander gemischten Komponenten und deren Partikelgröße zu steuern. Auch hierbei können auf die numerischen Werte der Tabelle 3, der Graphik der Fig. 7 und insbesondere auf die Parameter der numerischen Anpassung, hier wieder in Form eines Polynoms zweiten Grades, zurückgegriffen werden.

Die Tabelle 4 und der Graph 4 aus den Fig. 8 bzw. 9 zeigen, wie der Elastizitätsmodul E des erfindungsgemäßen Keramikmaterials (100) über die Dichte des zu Grunde liegenden silizierten Materials gesteuert werden kann.

In der Tabelle 4 der Fig. 8 ist eine Messreihe für ein kohlenstofffaserverstärktes Siliziumcarbid wiedergegeben Es wurden verschiedene kohlenstofffaserverstärkte Siliziumcarbidmaterialien mit unterschiedlichen Dichten erzeugt und dabei jeweils die Elastizitätsmoduli bestimmt.

Die Messergebnisse sind in der Tabelle und im Graphen 4 der Fig. 9 dargestellt, wobei sich im Wesentlichen ein linearer Zusammenhang in dem betrachteten Dichtebereich ergibt. Auch hier können wieder die numerischen Werte der Tabelle 4 aus den Fig. 8, die graphischen Angaben des Graphen 4 aus der Fig. 9 und letztlich die numerischen Parameter aus der Anpassungskurve zur Steuerung der Eigenschaften, insbesondere des Elastizitätsmoduls des erfindungsgemäßen Keramikmaterials (100) oder ihres Vorprodukts (50) verwendet werden.

Insgesamt ergibt sich, dass erfindungsgemäß über die Dichte und ihre Homogenität nach dem Formgebungsprozess ein Großteil der physikalischen, mechanischen aber auch thermischen und elektrischen Eigenschaften für das erfindungsgemäße Keramikmaterial (100) oder ihres Vorprodukts (50) gesteuert eingestellt werden können, wobei jedoch auch die Art der Ausgangsstoffe, nämlich des kohlenstoffbasierten oder kohlenstofffaserbasierten oder - verstärkten Ausgangsmaterials (10) und des Binders (20), und deren Faserlängenverteilung Eingang finden.

Bezugszeichenliste

| 10 | Ausgangsmaterial |
| 20 | Zusatzstoff, Additiv, Binder, Füllstoff |
| 30 | Mischpulver, Mischstoff |
| 30' | Granulat |
| 40 | Gefäß, Mischgefäß |
| 41 | Mischer |
| 42 | Gefäß, Pressform |
| 43 | Stempel |
| 50 | Vorprodukt des erfindungsgemäßen Keramikmaterials |
| 100 | erfindungsgemäßes homogenes Keramikmaterial |
| 100' | Werkstoff |
| p | Druck, Pressdruck |

**Patentansprüche**

1. Verfahren zum Herstellen von Keramikmaterial (100), das die folgenden Schritte umfasst:

   (S1) Herstellen einer homogenen Mischung, die

   (a) Kohlenstofffasern (10) mit einer Faserlängenverteilung $D_{50}$ < 15 $\mu$m, wobei die Kohlenstofffasern aus gemahlenen und carbonisierten Viskose- und/oder Zellulosefasern hergestellt sind, sowie
   (b) mindestens einem pulverförmigen und carbonisierbaren Binder (20), enthält,

(S2) Verdichten der homogenen Mischung unter Einwirkung von Druck (30),

(S3) Temperaturbehandlung zum Carbonisieren oder zum Carbonisieren und Graphitieren der verdichteten homogenen Mischung zum Erhalt eines Kohlenstoffmaterials und

(S4) Silizieren des Kohlenstoffmaterials zum Erhalt des Keramikmaterials mit einer Dichte im Bereich von 2,8 - 3,1 $g/cm^3$.

2. Verfahren nach Anspruch 1,

   - bei welchem die Kohlenstofffasern (10) eine Faserlängenverteilung $D_{95}$ < 30 $\mu$m aufweisen.

3. Verfahren nach einem der vorangehenden Ansprüche,
   bei dem der pulverförmige Binder (20) pulverförmiges Harz, insbesondere pulverförmiges Phenolharz enthält.

4. Verfahren nach einem der vorangehenden Ansprüche,
   bei dem der pulverförmige Binder eine Partikelgrößenverteilung $D_{50}$<100$\mu$m hat.

5. Verfahren nach einem der vorangehenden Ansprüche,
   bei dem das Mischungsverhältnis in der homogenen Mischung so gewählt ist und gegebenenfalls der Druck beim Verdichten (S2) und/oder die Temperatur bei der Temperaturbehandlung (S3) so gewählt wird, dass das Kohlenstoffmaterial eine Materialdichte im Bereich von 0,5$g/cm^3$ bis 0,85$g/cm^3$ hat.

6. Verfahren nach einem der vorangehenden Ansprüche,
   bei welchem die homogene Mischung 20-50 Gew.% Binder und 50-80 Gew.% Kohlenstofffasern, bevorzugt 30-40 Gew.% Binder und 60-75 Gew.% Kohlenstofffasern enthält.

7. Verfahren nach einem der vorangehenden Ansprüche,
   bei dem beim Schritt des Verdichtens (S2) ein Pressdruck (p) im Bereich von 1,0 MPa bis 4,0 MPa eingestellt wird.

8. Verfahren nach einem der vorangehenden Ansprüche,
   bei dem beim Schritt des Verdichtens (S2) die homogene Mischung in einer Form zu einem Formpressling geformt wird und der Formpressling im Temperaturbehandlungsschritt (S3) zu einem Formkörper aus dem Kohlenstoffmaterial umgewandelt wird.

9. Verfahren nach Anspruch 8,
   bei dem der Formpressling vor dem Carbonisieren gehärtet wird.

10. Verfahren nach einem der vorangehenden Ansprüche,
    bei dem mehrere Formkörper aus Kohlenstoffmaterial hergestellt werden, die vor dem Schritt des Silizierens (S4) mittels eines Klebers, insbesondere eines carbonisierbaren Klebers, zum Erhalt einer Formkörperanordnung aneinander gefügt werden.

11. Verfahren nachAnspruch 10,
    bei dem der carbonisierbare Kleber Harz, insbesondere Phenolharz und Siliziumkarbid-Pulver enthält.

12. Verfahren nach Anspruch 11,
    bei dem das Siliziumkarbid-Pulver einen durchschnittlichen Partikeldurchmesser von 1-50$\mu$m, bevorzugt 3-20$\mu$m, besonders bevorzugt 5-10$\mu$m hat.

13. Verfahren nach einem der Ansprüche 10 - 12,
    bei dem der carbonisierbare Kleber 5-50 Gew.% Wasser, 20-80 Gew.% Siliziumkarbidpulver und 10-55 Gew.% Harz enthält, bevorzugt 10-40 Gew.% Wasser, 30-65 Gew.% Siliziumkarbidpulver und 20-45 Gew.% Harz, besonders bevorzugt 15-25 Gew.% Wasser, 45-55 Gew.% Siliziumkarbidpulver und 27-33 Gew.% Harz.

14. Verfahren nach einem der Ansprüche 10 - 13,
    bei dem der carbonisierbare Kleber weniger als 10 Gew.%, insbesondere weniger als 3 Gew.% insbesondere keinen Füllstoff aus Kohlenstoffmaterial enthält.

15. Verfahren nach einem der Ansprüche 10 - 14,

bei dem die Formkörperanordnung vor dem Schritt S4 des Silizierens durch Abtrag von Kohlenstoffmaterial von der Formkörperanordnung so bearbeitet wird, dass ein Vorkörper aus Kohlenstoffmaterial mit einer vordefinierten Form entsteht.

16. Verfahren nach Anspruch 15,
bei dem der Vorkörper vor dem Silizieren carbonisiert wird.

**Claims**

1. Method for producing ceramic material (100) that comprises the following steps:

   (S1) producing a homogenous mixture that contains

   (a) carbon fibres (10) having a fibre length distribution of $D_{50} < 15$ $\mu$m, the carbon fibres being produced from ground and carbonised viscose fibres and/or cellulose fibres, and
   (b) at least one pulverised binding agent (20) that can be carbonised,

   (S2) compressing the homogenous mixture by applying pressure (30),
   (S3) heat-treating to carbonise or to carbonise and graphitise the compressed homogenous mixture in order to obtain a carbon material, and
   (S4) siliconizing the carbon material in order to obtain the ceramic material having a density in the range of from 2.8 to 3.1 g/cm$^3$.

2. Method according to claim 1, wherein the carbon fibres (10) have a fibre length distribution of $D_{95} < 30$ $\mu$m.

3. Method according to either of the preceding claims, wherein the pulverised binding agent (20) contains pulverised resin, in particular pulverised phenolic resin.

4. Method according to any of the preceding claims, wherein the pulverised binding agent has a particle size distribution of $D_{50} < 100$ $\mu$m.

5. Method according to any of the preceding claims, wherein the mixture ratio in the homogenous mixture is selected, and optionally the pressure during compressing (S2) and/or the temperature during heat-treating (S3) is selected, such that the carbon material has a material density in the range of from 0.5 g/cm$^3$ to 0.85 g/cm$^3$.

6. Method according to any of the preceding claims, wherein the homogenous mixture contains 20-50 wt.% binding agent and 50-80 wt.% carbon fibres, preferably 30-40 wt.% binding agent and 60-75 wt.% carbon fibres.

7. Method according to any of the preceding claims, wherein, during the step of compressing (S2), a pressing pressure (p) is set in the range of from 1.0 MPa to 4.0 MPa.

8. Method according to any of the preceding claims, wherein, during the step of compressing (S2), the homogenous mixture is moulded in a mould to form a compression-moulded part, and in the heat-treating step (S3), the compression-moulded part is transformed into a moulded body made of carbon material.

9. Method according to claim 8, wherein the compression-moulded part is hardened before the carbonising step.

10. Method according to any of the preceding claims, wherein a plurality of moulded bodies made of carbon material are produced, which bodies are attached to one other by means of an adhesive before the step of siliconizing (S4), in particular an adhesive that can be carbonised, in order to obtain a moulded body arrangement.

11. Method according to claim 10, wherein the adhesive that can be carbonised contains resin, in particular phenolic resin, and silicon carbide powder.

12. Method according to claim 11, wherein the silicon carbide powder has an average particle diameter of 1-50 $\mu$m, preferably 3-20 $\mu$m, particularly preferably 5-10 $\mu$m.

**13.** Method according to any of claims 10 to 12, wherein the adhesive that can be carbonised contains 5-50 wt.% water, 20-80 wt.% silicon carbide powder and 10-55 wt.% resin, preferably 10-40 wt.% water, 30-65 wt.% silicon carbide powder and 20-45 wt.% resin, particularly preferably 15-25 wt.% water, 45-55 wt.% silicon carbide powder and 27-33 wt.% resin.

**14.** Method according to any of claims 10 to 13, wherein the adhesive that can be carbonised contains less than 10 wt.%, in particular less than 3 wt.%, in particular no, filler made of carbon material.

**15.** Method according to any of claims 10-14, wherein, before the step S4 of siliconizing, the moulded body arrangement is processed, by carbon material being removed from the moulded body arrangement, in such a way that a preform made of carbon material having a predefined shape is produced.

**16.** Method according to claim 15, wherein the preform is carbonised before the siliconizing step.

**Revendications**

**1.** Procédé de fabrication d'un matériau céramique (100), comprenant les étapes suivantes :

(S1) fabrication d'un mélange homogène, qui contient

(a) des fibres de carbone (10) présentant une répartition des longueurs de fibres $D_{50} < 15 \mu$m, les fibres de carbone étant fabriquées à partir de fibres de viscose et/ou de cellulose broyées et carbonisées, ainsi que
(b) au moins un liant pulvérulent et carbonisable (20),

(S2) compression du mélange homogène par l'exercice d'une pression (30),
(S3) traitement thermique permettant de carboniser ou carboniser et graphiter le mélange homogène comprimé afin d'obtenir un matériau carboné et
(S4) enrichissement au silicium du matériau carboné afin d'obtenir le matériau céramique dont la densité est située dans la plage allant de 2,8 à 3,1 g/cm$^3$.

**2.** Procédé selon la revendication 1, dans lequel les fibres de carbone (10) présentent une répartition des longueurs de fibres $D_{95} < 30 \mu$m.

**3.** Procédé selon l'une quelconque des revendications précédentes, dans lequel le liant pulvérulent (20) contient une résine pulvérulente, en particulier une résine phénolique pulvérulente.

**4.** Procédé selon l'une quelconque des revendications précédentes, dans lequel le liant pulvérulent présente une répartition des tailles de particules $D_{50} < 100 \mu$m.

**5.** Procédé selon l'une quelconque des revendications précédentes, dans lequel le rapport de mélange dans le mélange homogène et, éventuellement, la pression lors de la compression (S2) et/ou la température lors du traitement thermique (S3), sont choisis de telle sorte que le matériau carboné présente une densité de matériau située dans la plage allant de 0,5 g/cm$^3$ à 0,85 g/cm$^3$.

**6.** Procédé selon l'une quelconque des revendications précédentes, dans lequel le mélange homogène contient de 20 à 50 % en poids de liant et de 50 à 80 % en poids de fibres de carbone, de préférence de 30 à 40 % en poids de liant et de 60 à 75 % en poids de fibres de carbone.

**7.** Procédé selon l'une quelconque des revendications précédentes, dans lequel à l'étape de compression (S2), une pression de compression (p) est réglée dans la plage allant de 1,0 MPa à 4,0 MPa.

**8.** Procédé selon l'une quelconque des revendications précédentes, dans lequel, à l'étape de compression (S2), le mélange homogène est façonné en comprimé moulé dans un moule et le comprimé moulé est transformé, à l'étape de traitement thermique (S3), en un corps moulé constitué du matériau carboné.

**9.** Procédé selon la revendication 8, dans lequel le comprimé moulé est durci avant la carbonisation.

**10.** Procédé selon l'une quelconque des revendications précédentes, dans lequel plusieurs corps moulés sont fabriqués à partir du matériau carboné, lesquels sont joints les uns aux autres avant l'étape d'enrichissement au silicium (S4) au moyen d'un adhésif, en particulier d'un adhésif carbonisable, afin d'obtenir un agencement de corps moulés.

**11.** Procédé selon la revendication 10, dans lequel l'adhésif carbonisable contient de la résine, en particulier de la résine phénolique, et de la poudre de carbure de silicium.

**12.** Procédé selon la revendication 11, dans lequel la poudre de carbure de silicium présente un diamètre particulaire moyen de 1 à 50 $\mu$m, de préférence de 3 à 20 $\mu$m, de manière particulièrement préférée de 5 à 10 $\mu$m.

**13.** Procédé selon l'une quelconque des revendications 10 à 12, dans lequel l'adhésif carbonisable contient de 5 à 50 % en poids d'eau, de 20 à 80 % en poids de poudre de carbure de silicium et de 10 à 55 % en poids de résine, de préférence de 10 à 40 % en poids d'eau, de 30 à 65 % en poids de poudre de carbure de silicium et de 20 à 45 % en poids de résine, de manière particulièrement préférée de 15 à 25 % en poids d'eau, de 45 à 55 % en poids de poudre de carbure de silicium et de 27 à 33 % en poids de résine.

**14.** Procédé selon l'une quelconque des revendications 10 à 13, dans lequel l'adhésif carbonisable contient moins de 10 % en poids, en particulier moins de 3 % en poids, et en particulier 0 % en poids d'agent de charge à base de matériau carboné.

**15.** Procédé selon l'une quelconque des revendications 10 à 14, dans lequel l'agencement de corps moulés est traité, avant l'étape d'enrichissement au silicium (S4), en éliminant le matériau carboné de l'agencement de corps moulés de façon à obtenir une ébauche en matériau carboné présentant une forme prédéfinie.

**16.** Procédé selon la revendication 15, dans lequel l'ébauche est carbonisée avant l'enrichissement au silicium.

Fig. 1

Tabelle 1:

Dichte der Materialzusammensetzung als
Funktion des Pressdrucks beim Formen

| Druck p MPa | Dichte CFK g/cm$^3$ | Dichte CFC g/cm$^3$ |
|---|---|---|
| 1,0 | 0,61 | 0,58 |
| 1,5 | 0,65 | 0,61 |
| 2,0 | 0,70 | 0,65 |
| 2,5 | 0,73 | 0,69 |
| 3,0 | 0,76 | 0,72 |
| 4,0 | 0,82 | 0,77 |

Fig. 2

Graph 1

## Dichte ρ als Funktion des Pressdrucks p

$$\rho1 = -0,0084p^2 + 0,1126p + 0,5043$$
$$R^2 = 0,9981$$

$$\rho2 = -0,0067p^2 + 0,0986p + 0,4836$$
$$R^2 = 0,9984$$

Legend:
◇ Dichte CFK empirisch
□ Dichte CFC empirisch
—— Dichte CFK angepasst
- - - - Dichte CFC angepasst

Y-axis: Dichte ρ / g/cm³
X-axis: Pressure p / MPa

EP 2 585 419 B1

Fig. 3

**Tabelle 2:**
Si-Aufnahme als
Funktion der
Dichte des CFC-
Materials

| Dichte CFC g/cm³ | Si-Aufnahme % | Si-Aufnahme % | Si-Aufnahme % | Si-Aufnahme % |
|---|---|---|---|---|
| 0,537 | 417,50 | | | |
| 0,568 | | 390,00 | | |
| 0,574 | | | 398,50 | |
| 0,590 | | | | 368,30 |
| 0,601 | | | | 361,60 |
| 0,607 | | | 371,10 | |
| 0,615 | | 354,00 | | |
| 0,616 | 365,90 | | | |
| 0,641 | | | | 339,00 |
| 0,644 | | | 346,10 | |
| 0,646 | 319,70 | | | |
| 0,652 | 342,10 | | | |
| 0,656 | | 330,80 | | |
| 0,666 | | 325,40 | | |
| 0,691 | | | | 312,70 |
| 0,695 | | | 313,10 | |
| 0,709 | | | | 301,70 |
| 0,715 | 295,30 | | | |
| 0,716 | | 298,90 | | |
| 0,722 | | | 303,60 | |
| 0,754 | | | | 285,20 |
| 0,766 | | 275,10 | | |
| 0,769 | 281,00 | | | |
| 0,777 | | | 280,70 | |

Fig. 4

Graph 2

Si-Aufnahme als Funktion der
Dichte des CFC-Materials

Fig. 5

EP 2 585 419 B1

Tabelle 3:
Dichte des CSiC-
Materials als Funktion der
Dichte des CFC-Materials

| Dichte CFC g/cm$^3$ | Dichte CSiC g/cm$^3$ | Dichte CSiC g/cm$^3$ |
|---|---|---|
| 0,578 | 2,856 | |
| 0,590 | | 2,846 |
| 0,601 | | 2,836 |
| 0,614 | 2,947 | |
| 0,641 | | 2,887 |
| 0,652 | 2,931 | |
| 0,688 | 2,954 | |
| 0,691 | | 2,927 |
| 0,709 | | 2,928 |
| 0,724 | 2,992 | |
| 0,754 | | 2,957 |
| 0,770 | 2,954 | |

Fig. 6

EP 2 585 419 B1

Graph 3

## Dichte CSiC als Funktion der Dichte CFC

$$\rho_{CSiC} = -1,7855\rho_{CFC}^2 + 3,1006\rho_{CFC} + 1,8223$$
$$R^2 = 0,976$$

Dichte $\rho_{CFC}$ / g/cm³

EP 2 585 419 B1

Fig. 7

EP 2 585 419 B1

Tabelle 4:

E-Modul der Materialzusammensetzung als Funktion der Dichte
des CSiC-Materials

Fig. 8

| Dichte CSiC g/cm$^3$ | E-Modul GPa |
|---|---|
| 2,84 | 278,8 |
| 2,86 | 274,6 |
| 2,84 | 277,6 |
| 2,80 | 273,3 |
| 2,85 | 206,6 |
| 2,88 | 292,5 |
| 2,85 | 290,0 |
| 2,88 | 294,0 |
| 2,92 | 305,8 |
| 2,90 | 311,1 |
| 2,91 | 301,1 |
| 2,91 | 311,6 |
| 2,94 | 296,9 |
| 2,92 | 303,7 |
| 2,93 | 321,0 |
| 2,95 | 322,9 |
| 2,94 | 325,8 |
| 2,94 | 324,1 |
| 2,96 | 325,6 |
| 2,96 | 323,0 |
| 2,95 | 328,6 |

EP 2 585 419 B1

## Graph 4

**E-Modul als Funktion der Dichte des CSiC-Materials**

$$E = 461,79 \rho_{CSiC} - 1040,4 GPa$$
$$R^2 = 0,5884$$

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1634860 A2